# EUROPÄISCHE PATENTSCHRIFT

(11) **EP 4 591 017 B1**
(45) Veröffentlichungstag und Bekanntmachung des Hinweises auf die Patenterteilung: **03.06.2026**
(21) Anmeldenummer: 23769242.1
(22) Anmeldetag: 14.09.2023
(51) Int. Cl.: C04B 20/04

(54) **VERFAHREN ZUM BETREIBEN EINER ANLAGE ZUR THERMISCHEN BEHANDLUNG EINES MINERALISCHEN STOFFES**
METHOD FOR OPERATING A PLANT FOR THE THERMAL TREATMENT OF A MINERAL SUBSTANCE
PROCÉDÉ D'EXPLOITATION D'UNE INSTALLATION DE TRAITEMENT THERMIQUE D'UNE SUBSTANCE MINÉRALE

(30) Priorität: 20.09.2022 DE 102022209877; 20.09.2022 LU 103014
(43) Veröffentlichungstag der Anmeldung: 30.07.2025
(73) Patentinhaber: thyssenkrupp Polysius GmbH, 59269 Beckum (DE); thyssenkrupp AG, 45143 Essen (DE)
(72) Erfinder: BERGER, Claudia, 08393 Schönberg (DE); LAMPE, Karl, 59320 Ennigerloh (DE); PRIESEMANN, Christina, 26689 Apen (DE)
(74) Vertreter: thyssenkrupp Intellectual Property GmbH
(86) Internationale Anmeldenummer: PCT/EP2023/075211
(87) Internationale Veröffentlichungsnummer: WO 2024/061711

(56) Entgegenhaltungen:
- WO-A1-2008/120109
- WO-A2-2012/056178

## Beschreibung

Die Erfindung betrifft ein Verfahren zum Betreiben einer Anlage zur thermischen Behandlung von mineralischen Stoffen, beispielsweise und insbesondere Ton und Puzzolane aus künstlichen oder natürlichen Gesteinen, beispielsweise und insbesondere aus Siliziumdioxid, Tonerde, Kalkstein, Eisenoxid und alkalischen Stoffen, aluminium-und/oder silizium-haltige Reststoffe aus der Metallverarbeitung, Keramik- und/oder Papierindustrie oder Bagger- und Hafenschlämme beispielsweise zur Herstellung von künstlichen Puzzolanen, als Ersatzstoff für die Herstellung von Zement, wobei vollständig auf Ersatzbrennstoffe zurückgegriffen werden kann und keine zusätzlichen fossilen Brennstoffe nötig sind.

Die Verwendung von Ersatzbrennstoffen zur Minderung von CO₂-Emissionen ist bekannt und inzwischen in vielen Bereichen weit verbreitet. Ersatzbrennstoff weisen jedoch oft schwankende Eigenschaften, insbesondere Brennwerte auf. Außerdem weisen einige Brennstoffe einen hohen Feuchtegehalt auf, sodass diese von sich aus oftmals nicht selbst zündfähig sind. Außerdem führt der unterschiedliche Feuchtegehalt zu einem unterschiedlichen Energiebedarf für die Verdampfung des Wassers, was ebenfalls die Temperatur beeinflusst. Des Weiteren variiert bei Ersatzbrennstoffen auch die Partikelgröße. Kleine Partikel brennen schneller und können einfacher vollständig verbrennen, größere Partikel brennen langsamer und gegebenenfalls nicht vollständig. Daher hat auch die Partikelgröße einen Einfluss auf die Temperatur. Daher werden in mit Ersatzbrennstoffen befeuerten Anlagen oft Zusatzbrenner für schnell regelbare fossile Brennstoff eingesetzt, um die Schwankungen im Brennwert (Brennwert fast hier und im Folgenden insbesondere alle vorgenannten Einflussgrößen auf die Temperatur zusammen) und die daraus resultierenden Temperaturschwankungen auszugleichen. Weiter ist es bei einigen energieintensiven thermischen Behandlungsprozessen vorteilhaft wenigstens ein Teil der Verbrennung und damit der Energieerzeugung direkt am Ort der thermischen Behandlung zu haben. Der Eintrag von fossilen Brennstoffen ist besser dosier- und dispergierbar, sodass sich eine homogenere Verteilung und eine bessere Interaktion mit den zu behandelnden Materialien ergibt. Hierfür werden bevorzugt Gas oder Kohlestaub eingesetzt. Somit werden heutzutage oftmals nur 60 bis 80 % des Brennstoffs in Form von Ersatzbrennstoff verwendet, 20 bis 40 % sind dennoch fossile Brennstoffe.

Aus der DE 10 2012 013 877 A1 ist ein Verfahren zur Behandlung von Biomasse als Brennstoff in einer Anlage zur Herstellung von Zementklinker bekannt, in welcher die Biomasse durch die Abgase eines Wärmetauschers der Anlage zunächst vorgetrocknet wird und wobei ein Verkohlen der Biomasse in einem Reaktor erfolgt.

Aus der WO 2012 / 056 178 A2 ist eine Anlage zur Herstellung von Zementklinker bekannt. Neben Ersatzbrennstoffen wird für das Verfahren ein Anteil an Edelbrennstoffen verwendet, wobei Kohle und Petrolkoks als Edelbrennstoffe angegeben werden.

Aus der WO 2008/120 109 A1 ist ein Verfahren und eine Anlage zur Herstellung von Zementklinker bekannt.

Aus der WO 2008 / 120 109 A1 ist ein Verfahren und eine Vorrichtung zur Klinkerherstellung bekannt.

Aus der WO 2012 / 056 178 A1 ist eine Vorrichtung zur Klinkerherstellung bekannt.

Aufgabe der Erfindung ist es, eine Vorrichtung bereitzustellen, mit der eine ausschließliche Verwendung von Ersatzbrennstoffen möglich wird und damit gänzlich auf fossile Brennstoffe verzichtet werden kann.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Die Anlage zur Durchführung des erfindungsgemäßen Verfahrens dient zur thermischen Behandlung eines mineralischen Stoffes. Beispiel für eine solche thermische Behandlung kann beispielsweise und insbesondere die thermische Behandlung von Ton und tonartigen Materialien zur Erzeugung puzzolanischer Stoffe sein. Die Anlage weist eine Vorrichtung zur thermischen Behandlung auf. Diese kann als Aktivator bezeichnet werden. Beispielsweise und insbesondere kann diese als Flugstrom-Calcinator ausgeführt sein. Üblicherweise ist vor der Vorrichtung zur thermischen Behandlung ein Vorwärmer angeordnet. Der Vorwärmer besteht oftmals aus einer Kaskade von Gleichstromwärmetauschern mit einem Abscheidezyklon. Weiter sind der Vorrichtung zur thermischen Behandlung optional eine Reduktionsvorrichtung zur Farboptimierung des Produkts und üblicherweise wenigstens ein Produktkühler nachgeschaltet, um die Wärme zurück in den Prozess zu führen. Der Produktkühler kann auch mehrstufig ausgebildet sein. Die Anlage weist eine Brennkammer auf. In der Brennkammer wird ein Brennstoff verbrannt, um die thermische Energie für die thermische Behandlung bereitzustellen. Dazu ist die Brennkammer zur Überführung der in der Brennkammer erzeugten Brenngase mit der Vorrichtung zur thermischen Behandlung verbunden. Weiter weist die Brennkammer einen Feststoffaustrag auf. Über den Feststoffaustrag werden feste Reststoffe, die bei der Verbrennung nicht zu gasförmigen Produkten umgesetzt werden, ausgetragen. Der Feststoffaustrag erfolgt bevorzugt durch Abwurf über eine Schurre und eine daran anschließende Austragsvorrichtung, kann aber auch direkt mechanisch, beispielsweise mit einer Schnecke oder einem Schieber, erfolgen. Der Feststoffaustrag kann auch mit Hilfe eines Gasstromes pneumatisch oder fluidisierend erfolgen. Die Vorrichtung zur thermischen Behandlung weist wenigstens einen Brennbereich auf. Ein Brennbereich kann innerhalb der eigentlichen thermischen Behandlung erfolgen, also beispielsweise in einem Flugstromcalcinator. Der Vorteil ist, dass die Wärme dann direkt an dem Ort erzeugt wird, wo diese direkt durch die thermische Behandlung des Materials auch verbraucht wird. Der Brennbereich kann aber auch in einer getrennten Heizvorrichtung angeordnet sind, beispielsweise um einer Vorrichtung, auch beispielsweise der Brennkammer, vorgewärmtes Gas zuzuführen. Brennbereich ist somit im Sinne der Erfindung nicht nur eine baulich getrennte Brennvorrichtung begrenzt, sondern kann auch in anderen Vorrichtungen integriert sein. Der Brennbereich ist mit einer Brennstoffzufuhrvorrichtung verbunden. Über die Brennstoffzufuhrvorrichtung wird dem Brennbereich Brennstoff zugeführt und damit die Verbrennung im Brennbereich aufrechterhalten. Die Vorrichtung zur thermischen Behandlung kann auch zwei oder mehr Brennbereiche und damit zwei oder mehr Brennstoffzufuhrvorrichtungen aufweisen, insbesondere an verschiedenen Orten. Über die Brennstoffzufuhrvorrichtung wird ein Brennstoff direkt der Vorrichtung zur thermischen Behandlung zugeführt. Die Vorrichtung zur thermischen Behandlung kann beispielsweise eine Reaktionszone und eine Behandlungszone aufweisen. In diesem Fall erfolgt die Zufuhr des Brennstoffs durch die Brennstoffzufuhrvorrichtung in die Reaktionszone. Dadurch kann zum einen die Temperatur in der Behandlungszone konstanter gehalten werden, da die thermische Behandlung vor allem in der Reaktionszone dem Gasstrom üblicherweise Energie entzieht und dieser dadurch abkühlt. Zum anderen kann dadurch die Temperatur im Inneren der Vorrichtung zur thermischen Behandlung gezielter und schneller gesteuert werden. Heutzutage werden in der Brennkammer oft Ersatzbrennstoffe eingesetzt, welche einen schwankenden Brennwert (einschließlich Feuchte, Partikelgröße und weiterer Einflussgrößen) aufweisen, wodurch es zu Temperaturschwankungen kommt. Um diese auszugleichen wird beispielsweise Kohlenstaub direkt in die Vorrichtung zur thermischen Behandlung eingebracht, um gezielt die Schwankungen auszugleichen und so die Temperatur gezielt zu steuern, insbesondere konstant zu halten.

Erfindungsgemäß ist die Brennkammer zur Erzeugung eines nicht vollständig ausgebrannten Feststoffrestes ausgebildet. Ziel ist, dass der der Brennkammer zugeführte Brennstoff nur teilweise ausgebrannt wird. Dadurch wird ein nicht vollständig ausgebrannter Feststoffrest erzeugt, der wiederum als brennbarer Feststoff an anderer Stelle in der Anlage verbrennbar ist. Vorteil hiervon ist, dass in der Brennkammer insbesondere minderwertige Brennstoff wie Ersatzbrennstoff gut umgesetzt werden können, die beispielsweise im Fall von Biomasse einen hohen Feuchtigkeitsgehalt aufweisen können. Daher sind diese Ersatzbrennstoffe vergleichsweise anspruchsvoll, was die Zündfähigkeit der Verbrennung angeht und was die Dauer der Verbrennung zu einer sicheren Umsetzung angeht. Durch die lediglich unvollständige Verbrennung wird ein Feststoff erzeugt, der zum einen trocken ist und zum anderen einen hohen Brennwert aufweist. Dieser brennbare Feststoff kann daher innerhalb der Anlage an Stellen Eingesetzt werden, an denen eine sichere Verbrennung von Ersatzbrennstoffen nicht möglich ist und daher bisher beispielsweise Kohlenstaub als Brennstoff verwendet wurde. Der Feststoffaustrag der Brennkammer ist mit einer Zerkleinerungsvorrichtung verbunden. Der aus der Brennkammer ausgetragene brennbare Feststoff (oder brennwerthaltige Feststoff), welcher insbesondere heizwerthaltige und teilpyrolysierte Bestandteile enthält, wird somit zerkleinert. In der Zerkleinerungsvorrichtung wird der aus der Brennkammer ausgetragene Feststoff zerkleinert. Ohne eine vorherige Kühlung ist die Verwendung eines Brechers zur Zerkleinerung bevorzugt. Dieser brennbare Feststoff stellt wiederum einen thermisch verwertbaren aufbereiteten brennbaren Feststoff dar, der ähnlich wie Kohlenstaub eingesetzt werden kann. Daher ist die Zerkleinerungsvorrichtung direkt oder bevorzugt indirekt über eine Lagervorrichtung mit der Brennstoffzufuhrvorrichtung verbunden. Dadurch wird es möglich tatsächlich auf fossile Brennstoffe vollständig zu verzichten. Der hierfür notwendige hochkalorische Brennstoff wird somit im Prozess selber hergestellt. Dieses ermöglicht alle den vollständigen Ersatz hochwertiger insbesondere primärer Brennstoffe, wie Gas, Öl oder Kohle, durch minderwertige Ersatzbrennstoffe.

Als Zerkleinerungsvorrichtung kann eine Mühe oder ein Brecher verwendet werden. Da das teilpyrolisierte Material oftmals sehr spröde und porös ist, kann auch mit einem Brecher oft eine ausreichende Zerkleinerung in technisch sehr einfacher Wiese erreicht werden.

In einer weiteren Ausführungsform der Erfindung ist der Feststoffaustrag der Brennkammer mit einer Kühlvorrichtung verbunden. Der aus der Brennkammer ausgetragene brennbare Feststoff (oder brennwerthaltige Feststoff), welcher insbesondere heizwerthaltige und teilpyrolysierte Bestandteile enthält, wird somit gekühlt. Eine Kühlung verhindert eine ungewollte Oxidation, beispielsweise mit dem Sauerstoff der Luft. Die Kühlvorrichtung ist somit zur Kühlung des aus der Brennkammer ausgetragenen brennbare Feststoffs ausgebildet. Die Kühlvorrichtung ist mit der Zerkleinerungsvorrichtung verbunden. In der Zerkleinerungsvorrichtung wird der aus der Brennkammer ausgetragene und in der Kühlvorrichtung gekühlte brennbare Feststoff zerkleinert, insbesondere gemahlen.

In einer weiteren Ausführungsform der Erfindung ist zwischen der Zerkleinerungsvorrichtung und der Brennstoffzufuhrvorrichtung eine Lagervorrichtung angeordnet. Die Lagervorrichtung ermöglicht eine zeitlich gezielte Zugabe des zerkleinerten, insbesondere gemahlenen, brennbaren Feststoffs und somit eine gezielte Steuerung insbesondere in Bezug auf die Temperatur in der Vorrichtung zur thermischen Behandlung. Damit kann auch gezielt auf Schwankungen im Brennwert des in die Brennkammer eingebrachten Ersatzbrennstoffs reagiert werden. Des Weiteren kann bei einem Überschuss an zerkleinertem, insbesondere gemahlenem, brennbaren Feststoffdieser auch anderweitig in einfacher Weise verwendet werden, beispielsweise einer weiteren Anlage zugeführt werden.

In einer weiteren Ausführungsform der Erfindung ist zwischen der Zerkleinerungsvorrichtung und der Brennstoffzufuhrvorrichtung eine Dosiervorrichtung angeordnet. Diese Ausführungsform ist vorteilhaft, wenn nicht nur die Brennstoffzufuhrvorrichtung, sondern auch weitere Vorrichtungen mit dem zerkleinerten brennbaren Feststoff versorgt werden. Besonders bevorzugt ist diese Ausführungsform, wenn beispielsweise eine weitere Vorrichtung ein Verstromungsaggregat ist, welches leicht mit schwankender Auslastung betrieben werden kann. In diesem Fall wird jeder Überschuss direkt in das Verstromungsaggregat geführt, sodass für die Anlage selbst immer genau die benötigte Menge an zerkleinertem, brennbaren Feststoff zur Verfügung steht und kein Überschuss prodoziert wird, da dieser immer direkt im Verstromungsaggregat umgesetzt wird.

In einer weiteren Ausführungsform der Erfindung weist die Kühlvorrichtung eine Gaskühlung auf. Eine Kühlung mit einem sauerstoffhaltigen Gas weist den Vorteil auf, dass das dort erwärmte Gas leicht in andere Prozesse integriert werden kann und somit die Energie leicht wieder in den Prozess zurückgeführt werden kann. Beispielsweise weist die Kühlvorrichtung eine Verbindung zur Brennkammer zur Überführung des vorgewärmten sauerstoffhaltigen Gases auf. In diesem Beispiel wird Luft, mit Sauerstoff angereicherte Luft oder Sauerstoff als Kühlgas verwendet. Ebenso kann auch ein Gas mit einem verringerten Sauerstoffgehalt, beispielsweise mit nur 5 bis 10 %, verwendet werden. Dieses Gas kann beispielsweise aus dem Gesamtprozess selber stammen. Vorteil des reduzierten Sauerstoffgehaltes ist, dass eine ungewollte Oxidation des zu kühlenden brennbare Feststoffes vermieden werden kann.

In einer alternativen Ausführungsform wird für die Gaskühlung anstelle des sauerstoffhaltigen Gases ein gasförmiges Reduktionsmittel zur Kühlung des teilpyrolysierten Brennstoffes verwendet. Dieses gasförmige Reduktionsmittel kann beispielsweise einer Reduktionsvorrichtung zur Farboptimierung zugeführt werden.

In einer weiteren Ausführungsform weist die Anlage wenigstens eine der Vorrichtung zur thermischen Behandlung nachgeschaltete Reduktionsvorrichtung auf. In der Reduktionsvorrichtung werden beispielsweise im Produkt enthaltene Eisenverbindungen von Fe^{III} zu Fe^{II} mittels eines gasförmigen Reduktionsmittels reduziert, was eine Farbjustierung von Rot in Richtung Schwarz des Produkts bewirkt. In dieser Ausführungsform weist die Kühlvorrichtung eine Verbindung zur Reduktionsvorrichtung zur Überführung des in der Kühlvorrichtung vorgewärmten gasförmigen Reduktionsmittels auf. In dieser Ausführungsform können als Kühlgas beispielsweisekohlenwasserstoffhaltige, wasserstoffhaltige Gase und/oder CO oder Gemische dieser Gase sowie Gemsiche dieser Gase insbesondere mit Inertagsen wie zum Beispiel Stickstoff oder Kohlendioxid genutzt werden, welche in der nachgeschalteten Reduktionsvorrichtung als gasförmiges Reduktionsmittel verwendet werden.

In einer weiteren Ausführungsform der Erfindung weist die Kühlvorrichtung eine Wassereinspritzung auf. Hierdurch ist eine sehr schnelle Abkühlung möglich. Bevorzugt wird der dabei erzeugte Dampf in weiteren Prozessen verwendet, um die Energie zu nutzen.

In einer weiteren Ausführungsform der Erfindung weist die Kühlvorrichtung ein Wärmetauschmedium auf. Die Kühlvorrichtung weist ein Trennelement zur Trennung von Wärmetauschmedium und ausgetragenem brennbare Feststoff auf. Beispielsweise kann hierbei das Wärmetauschmedium durch einen Rohrmantel fließen und im Inneren des Rohres wird der aus der Brennkammer ausgetragene brennbare Feststoff beispielsweise mittels einer Schnecke gefördert. Vorteil dieser Ausführungsform ist, dass diese unter starker Reduktion von Luftzutritt erfolgen kann, also eine Oxidation oder gar ein Abbrennen verhindert wird. In diesem Fall kann die in der Kühlvorrichtung aus das Wärmetauschmedium übertragene Energie beispielsweise für die Erwärmung eines gasförmigen Reduktionsmittels genutzt werden.

In einer weiteren Ausführungsform der Erfindung weist die Brennkammer eine Transportvorrichtung für den Brennstoff auf. Durch eine Transportvorrichtung kann die Verweilzeit des Brennstoffes in der Brennkammer gezielt eingestellt werden. Beispiele für solche Transportvorrichtungen in Brennkammern sind beispielswiese getrennt verschiebbare Streifenelemente, ein umlaufendes Förderband aus Kettenelementen oder auch Schubelemente oder Förderschnecken. Alternativ kann die Transportvorrichtungen auch pneumatisch oder fluidisierend betrieben werden. Beispielsweise kann von unten ein fluidisierendes Gas, vorzugsweise mit Strömungsrichtung entlang der Förderrichtung zugeführt werden.

In einer weiteren Ausführungsform der Erfindung weist die Anlage eine Hilfsbrennvorrichtung auf. Die Hilfsbrennvorrichtung ist mit der Brennkammer zur Überführung heißer Brenngase verbunden. Dieses kann beispielsweise für das Anfahren verwendet werden, um die Brennkammer auf eine Starttemperatur zu bringen. Analog kann auch im Regelbetrieb eine Zufeuerung erfolgen, um beispielweise eine ausreichend hohe Zündtemperatur, beispielsweise bei feuchten Ersatzbrennstoffen, sicherzustellen. Die Hilfsbrennvorrichtung ist mit der Zerkleinerungsvorrichtung verbunden. Dieses kann direkt oder über Lagervorrichtung erfolgen. Dadurch wird der zerkleinerte brennbare Feststoff der Hilfsbrennvorrichtung zugeführt.

In einer weiteren Ausführungsform der Erfindung weist die Anlage einen Flugstromcalcinator auf. Der Brennbereich ist im oder am Flugstromcalcinator angeordnet. Insbesondere ist der Brennbereich im unteren Drittel des Flugstromcalcinators angeordnet. Hierbei können auch zwei oder mehr Brennstoffzufuhrvorrichtung zu dem unteren Drittel des Flugstromcalcinators vorhanden sein, um eine möglichst gleichmäßige Wärmeerzeugung parallel zur thermischen Umsetzung als Wärmesenke zu haben und somit eine möglichst konstante Temperatur über die Reaktionsstrecke zu haben.

Das erfindungsgemäße Verfahren zum Betreiben einer Anlage wie zuvor beschrieben. Als Brennstoff werden für die Anlage nur Ersatzbrennstoffe eingesetzt. Der Ersatzbrennstoff wird der Brennkammer zugeführt. Durch die Verwendung des zerkleinerten, insbesondere gemahlenen, aus der Brennkammer ausgetragenen brennbaren Feststoff als weiteren Brennstoff kann auf die Nutzung von fossilen Brennstoffen verzichtet werden und ausschließlich auf Ersatzbrennstoffe zurückgegriffen werden. Stammen die Ersatzbrennstoffe aus regenerativen Quellen, also beispielsweise Biomasse einschließlich Holz, so ist die Verfeuerung CO₂-neutral. Da auch aus den Tonen kein oder nur sehr wenig CO₂ freigesetzt wird, stellt der Prozess eine Möglichkeit zur weiteren Reduktion der Klimaauswirkung in diesem sehr relevanten Bereich der Zementindustrie dar. Aus dem Ersatzbrennstoff wird ein nicht vollständig ausgebrannter Feststoffrest erzeugt. Dieser nicht vollständig ausgebrannte Feststoffrest stellt einen brennbaren Feststoff dar, welcher einen gegenüber dem Ersatzbrennstoff meist höheren Brennwert aber vor allem eine bessere Zündfähigkeit aufweist. Als weiteres tritt hinzu, dass dieser brennbare Feststoff leicht flugfähig zu machen ist und damit im Gegensatz zu Ersatzbrennstoffen leicht auch an anderen Stellen eingesetzt werden kann, an denen ein Ersatzbrennstoff nicht oder nicht sicher verbrennbar ist.

Bei der Verbrennung eines Ersatzbrennstoffes in der Brennkammer werden üblicherweise auch brennbare gasförmige Stoffe freigesetzt. Diese werden zusammen mit dem in der Brennkammer erhitzen Brenngase der Vorrichtung zur thermischen Behandlung zugeführt und können dort weiter verbrennen, was vorteilhaft ist, da in dem Bereich, in den die Brenngase zugeführt werden, wie Wärme beispielsweise für die thermische Umsetzung benötigt wird, sonst würde man die Brenngase dort nicht hinführen.

In einer weiteren Ausführungsform der Erfindung wird die Verbrennung des Ersatzbrennstoffes derart geführt, dass der nicht vollständig ausgebrannte Feststoffrest als brennbarer Feststoff einen Kohlenstoffanteil von wenigstens 30 Gew.-%, bevorzugt von wenigstens 50 Gew.-%, besonders bevorzugt von wenigstens 70 Gew.-%, Kohlenstoff aufweist. Es wird somit ein brennbarer Feststoff geschaffen, dessen Eigenschaften eine ähnlich breite Verwendung ermöglichen, wie heute Kohlestaub. Es ist dadurch insbesondere eine Verbrennung im Flugstrom möglich.

In einer weiteren Ausführungsform der Erfindung wird dem Brennbereich ausschließlich nicht vollständig ausgebrannter Feststoffrest als Brennstoff zugeführt. Es wird somit auf wertvolle primäre Brennstoffe wie Gas, Öl oder Kohle vollständig verzichtet.

In einer weiteren Ausführungsform der Erfindung wird der brennbare Feststoff messtechnisch, beispielsweise mittels NIR-Spektroskopie erfasst. Die Verbrennung in der Brennkammer wird entsprechend der messtechnisch erfassten Daten gesteuert, um einen brennbaren Feststoff mit vorgegebenen Eigenschaften, beispielsweise einem vorgegebenen Kohlenstoffanteil, zu erhalten.

In einer weiteren Ausführungsform der Erfindung wird die Verbrennung in der Brennkammer unter oxidierenden Bedingungen durchgeführt. Das bedeutet, dass die die Brennkammer verlassenden Brenngase noch einen Restsauerstoffgehalt aufweisen. Ziel ist eine stöchiometrische oder leicht überstöchiometrische Verbrennung des eingesetzten Brennstoffes, wobei ein Teil des Ersatzbrennstoffes pyrolysiert, also praktisch verkohlt. Dieser Kohlenstoffanteil des brennbaren Feststoffs kann dann nach dem Vermahlen hervorragend als Brennstoff erneut im Prozess eingesetzt werden.

In einer weiteren Ausführungsform der Erfindung wird als mineralischer Stoff Ton, künstliche oder natürliche Gesteinen, beispielsweise und insbesondere aus Siliziumdioxid, Tonerde, Kalkstein, Eisenoxid und alkalischen Stoffen, aluminium-und/oder silizium-haltige Reststoffe aus der Metallverarbeitung, Keramik- und/oder Papierindustrie eingesetzt. Besonders bevorzugt als mineralischer Stoff wird Ton eingesetzt.

In einer weiteren Ausführungsform der Erfindung wird als Ersatzbrennstoff Biomasse, vorzugsweise Holz oder ein Holzprodukt, eingesetzt.

In einer weiteren Ausführungsform der Erfindung wird der ausgetragene brennbare Feststoff auf eine flugfähige Partikelgröße vermahlen. Als flugfähig im Sinne der Erfindung werden Partikel angesehen, welche kleiner als 500 µm, vorzugsweise kleiner als 250 µm, höchstvorzugshalber kleiner 100 µm sind. Hierdurch ist eine spätere Einbringung in den Prozess in einfacher Weise möglich. Gleichzeitig ermöglicht es, diesen in bestehenden Anlagen beispielsweise entsprechende Brennvorrichtungen oder Förderaggregate zum Beispiel für Kohlestaub weiter zu verwenden.

In einer weiteren Ausführungsform der Erfindung wird der gemahlene und gekühlte brennbare Feststoff zwischengelagert. Die Zwischenlagerung erlaubt zum einen die gezielte Steuerung des Prozesses, um insbesondere die Temperatur gezielt zu steuern.

Zusätzlich kann dieses helfen, Brennwertschwankungen im Ersatzbrennstoff auszugleichen. Zusätzlich kann aus der Zwischenlagerung beispielsweise auch eine Hilfsbrennvorrichtung mit dem brennbaren Feststoff aus der Zwischenlagerung betrieben werden, um beispielsweise mit der Hilfsbrennvorrichtung vor oder am Eingang der Brennkammer eine ausreichend hohe Temperatur zur Verbrennung des Ersatzbrennstoffes einzustellen. Die Zwischenlagerung ermöglicht es, auch die Stoffströme zwischen den unterschiedlichen Verwendungen unterschiedlich aufzuteilen und so flexibler zu reagieren. Außerdem kann ein bereits vorhandener zwischengelagerter brennbarer Feststoff für weitere Anfahrvorgänge eingesetzt werden.

In einer weiteren Ausführungsform der Erfindung wird die Gaszufuhr zur Brennkammer derart geregelt, dass der Sauerstoffgehalt in den Brenngasen zwischen 1 % und 5 % liegt. Der Prozentanteil wird auf den Volumenanteil im trockenen Gas und bei Normbedingungen bezogen. Hierdurch wird eine saubere Verbrennung ermöglicht. Außerdem ist auch eine weitere Verbrennung in der nachgeschalteten Vorrichtung zur thermischen Behandlung möglich, da noch ausreichend Sauerstoff zur Verfügung steht.

In einer weiteren Ausführungsform der Erfindung wird der Anteil des ausgetragenen brennbaren Feststoffes über die Verweilzeit des Brennstoffs in der Brennkammer eingestellt. Da der Ersatzbrennstoff keine konstante und klar vorhersagbare Zusammensetzung, Feuchtigkeit und Größe und damit Brennverhalten aufweist, ist eine gezielte Regelung der Verweilzeit vorteilhaft. Diese über den Anteil des ausgetragenen brennbaren Feststoffes, beispielsweise über die Masse des ausgetragenen brennbaren Feststoffes zu regeln, stellt eine einfache und zielgerichtete Möglichkeit dar, ohne die Verbrennungsprozesse im Inneren der Brennkammer selber genau kennen zu müssen. Außerdem kann so sichergestellt werden, dass immer ausreichend zerkleinerter, insbesondere gemahlener, brennbarer Feststoff als weiterer Brennstoff zur Verfügung steht. Diese Entkopplung bietet den Vorteil einer konstanten Betriebsweise der thermischen Behandlungseinrichtung.

In einer weiteren Ausführungsform der Erfindung weist die Gaszufuhr zur Brennkammer einen Sauerstoffgehalt von mindestens 50 % bevorzugt von mindestens 90 %, besonders bevorzugt von mindestens 95 %, auf. Dadurch weist die Abluft am Ende des gesamten Prozesses hauptsächlich Wasser und Kohlendioxid auf. Dadurch ist das Kohlendioxid vergleichsweise einfach abtrennbar und kann weiter verwendet oder gelagert werden, um eine zusätzliche Minimierung des CO₂-Emission zu erreichen und so gegebenenfalls andere CO₂-Emissionen aus anderen Prozessen in einfacher Weise zu kompensieren.

In einer weiteren Ausführungsform der Erfindung wird der zerkleinerte, insbesondere gemahlene, brennbare Feststoff mit einem Gasstrom zur Verbrennung der Vorrichtung zur thermischen Behandlung zugeführt.

In einer weiteren Ausführungsform der Erfindung wird der zerkleinerte, insbesondere gemahlene, brennbare Feststoff der Brennkammer zugeführt. Dieses erfolgt insbesondere in einer Hilfsbrennvorrichtung, welche zur Erzeugung einer ausreichenden Zündtemperatur für den Ersatzbrennstoff sorgt. Die Hilfsbrennvorrichtung kann auch der Brennkammer vorgelagert sein, sodass nur heiße Gase aus der Hilfsbrennvorrichtung in die Brennkammer eingebracht werden.

In einer weiteren Ausführungsform der Erfindung erfolgt die Regelung der Verweilzeit des Brennstoffs in der Brennkammer derart, dass dadurch die Temperatur der die Brennkammer verlassenden Gase geregelt wird und somit die Temperatur in der Vorrichtung zur thermischen Behandlung. Beispielsweise wird die Verweilzeit erhöht, um eine vollständigere Verbrennung und damit eine höhere Temperatur zu erreichen oder die Verweilzeit wird verkürzt, um eine weniger vollständige Verbrennung und damit eine geringere Temperatur zu erreichen. Als Nebenergebnis wird die Menge an ausgetragenem brennbaren Feststoff verändert.

In einer weiteren Ausführungsform der Erfindung wird der zerkleinerte brennbare Feststoff der Reduktionsvorrichtung zugeführt. Hier kann der zerkleinerte brennbare Feststoff zur Erzeugung einer reduzierenden Atmosphäre genutzt werden.

Nachfolgend ist die Anlage zur Durchfühurng des erfindungsgemäßen Verfahrens anhand eines in den Zeichnungen dargestellten Ausführungsbeispiels näher erläutert.
- Fig. 1: erste beispielhafte Ausführungsform
- Fig. 2: zweite beispielhafte Ausführungsform
- Fig. 3: dritte beispielhafte Ausführungsform

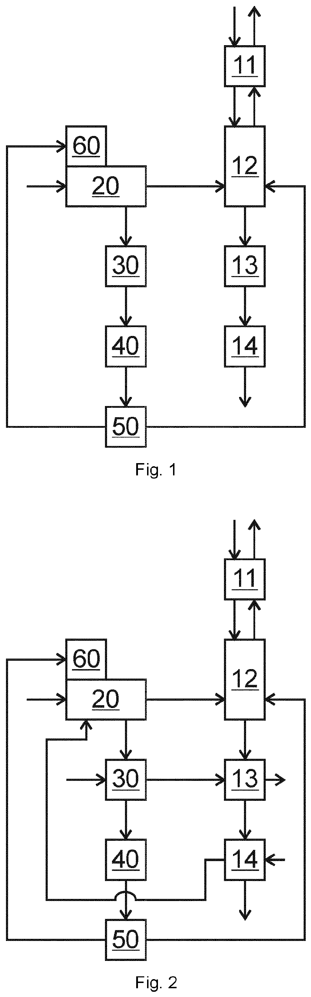

In Fig. 1 ist eine erste beispielhafte Ausführungsform der erfindungsgemäßen Anlage gezeigt, anhand derer das erfindungsgemäße Verfahren erläutert werden soll. Der Materialstrom des thermisch zu behandelnden mineralischen Stoffes, beispielsweise und insbesondere eines Tones, wird in den Vorwärmer 11 eingebracht, vorgewärmt und gelangt vorgewärmt in die Vorrichtung zur thermischen Behandlung 12. Beispielsweise einen Flugstromcalcinator. Dort erfolgt bei hohen Temperaturen, beispielsweise zwischen 700°C und 1200 °C die thermische Behandlung, insbesondere die Aktivierung des Tones. Anschließend gelangt der Materialstrom in eine Reduktionsvorrichtung 13, wo in einer reduzierenden Atmosphäre, die zum Beispiel Kohlenwasserstoffe, Wasserstoff und/oder Kohlenmonoxid aufweist, farbgebende Bestandteile, beispielsweise Fe^{III}, zu weniger farbigen Substanzen, beispielsweise Fe^{II}, umgesetzt werden. Anschließend erfolgt in einem Produktkühler 14 eine Abkühlung des fertigen Produkts, welches beispielsweise in der Zementindustrie Verwendung findet.

Um die für die Vorrichtung zur thermischen Behandlung 12 notwendige Energie zur Verfügung zu stellen, weist die Anlage eine Brennkammer 20 auf. Der Brennkammer 20 wird ein Ersatzbrennstoff, beispielsweise Biomasse, zugeführt und in der Brennkammer 20 teilweise verbrannt. Ein Teil des Ersatzbrennstoffes pyrolysiert aber auch nur in der Brennkammer 20. Der Anteil zwischen Verbrennung und Pyrolyse kann insbesondere über die Aufgabemenge an Ersatzbrennstoff und/oder Transport beziehungsweise Verweilzeit des Ersatzbrennstoffes durch die Brennkammer 20 eingestellt werden. Je kürzer die Verweilzeit in der Brennkammer 20 ist, umso höher fällt in erster Näherung der Anteil an pyrolysiertem Material aus. Die heißen Brenngase werden direkt aus der Brennkammer 20 in die Vorrichtung zur thermischen Behandlung 20 geleitet. Hierzu können die Brennkammer 20 und die Vorrichtung zur thermischen Behandlung 12 direkt aneinander angrenzen, insbesondere ist die Brennkammer 20 seitlich direkt an die Vorrichtung zur thermischen Behandlung12 angesetzt. Das in der Brennkammer 12 pyrolysierte Material wird aus der Brennkammer 20 ausgetragen und in eine Kühlvorrichtung 30 überführt. Beispielswiese kann die Kühlvorrichtung 30 eine Wassereindüsung aufweisen. Hierdurch wird das pyrolysierte Material sehr schnell abgekühlt, sodass eine ungewollte weitere Oxidation schnell verhindert wird. Das abgekühlte Material wird aus dem Produktkühler 30 in die Mühle 40 überführt und dort gemahlen. Das gemahlene Material wird in der Lagervorrichtung 50 gelagert. Aus der Lagervorrichtung 50 wird ein Teil des pyrolysierten gekühlten und gemahlenen Materials über eine Brennstoffzufuhrvorrichtung in die Vorrichtung zur thermischen Behandlung 12 eingeführt. Hierdurch kann die Temperatur in der Vorrichtung zur thermischen Behandlung 12 gezielt und einfach gesteuert werden, auch bei einem schwankenden Brennwert des Ersatzbrennstoffs. Zusätzlich kann auch zweite Brennstoffzufuhrvorrichtung vorgesehen sein, um beispielsweise an zwei Orten der Vorrichtung zur thermischen Behandlung 12 Brennstoff zuzuführen und so die Temperatur über die Länge der Vorrichtung zur thermischen Behandlung 12 konstanter zu halten oder gegebenfalls zu erhöhen. Ebenso kann eine dritte Brennstoffzufuhrvorrichtung oder noch weitere Brennstoffzufuhrvorrichtungen vorgesehen sein.

Aus der Lagervorrichtung 50 wird ein anderer Teil des pyrolysierten und gemahlenen Materials in eine Hilfsbrennvorrichtung 60 gebracht, welche für ausreichend hohe Temperaturen am Eingang der Brennkammer 20 sorgt und so für eine gute Verbrennung des Ersatzbrennstoffes ermöglicht.

Fig. 2 zeigt eine zweite beispielhafte Ausführungsform, welche zusätzlich zur ersten beispielhaften Ausführungsform zusätzliche aufgezeigte Gasströme aufweist. Das Gas, welches in dem Produktkühler 14 zur Kühlung des Produktes eingesetzt wird, wird vom Produktkühler zur Brennkammer 20 geführt. Dadurch wird die Wärme in den Prozess zurückgeführt. Bei dem Gas handelt es sich beispielsweise um Luft. Als Gas kann aber auch angereicherter Sauerstoff, beispielsweise mit mindestens 50 %, bevorzugt mindestens 90 % Sauerstoff sein. Für die Reduktionsvorrichtung 13 wird jedoch ein anderes Gas benötigt, da hier kein Sauerstoff, sondern reduzierende Komponenten des Gases benötigt werden. Daher kann dieses reduzierende Gas, welches beispielsweise Synthesegas ist und somit insbesondere Wasserstoff und Kohlenmonoxid als reduzierende Komponenten aufweist, in der Kühlvorrichtung 30 zur Kühlung des aus der Brennklammer 20 ausgetragenen brennbare Feststoffes verwendet werden und so vorgewärmt der Reduktionsvorrichtung 13 zugeführt werden.

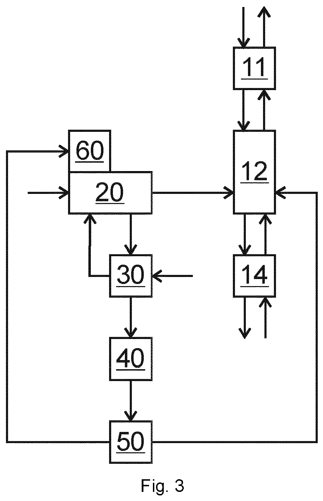

In Fig. 3 ist eine dritte beispielhafte Ausführungsform der erfindungsgemäßen Anlage gezeigt. Diese weist keine Reduktionsvorrichtung 13 auf, sodass der Gasstrom und der Materialstrom vom Vorwärmer 11 über die Vorrichtung zur thermischen Behandlung 12 und den Produktkühler 14 im Gegenstrom geführt werden. Das der Brennkammer 20 zugeführte Gas wird in der Kühlvorrichtung 30 vorgewärmt.

### Bezugszeichen

- 11: Vorwärmer
- 12: Vorrichtung zur thermischen Behandlung
- 13: Reduktionsvorrichtung
- 14: Produktkühler
- 20: Brennkammer
- 30: Kühlvorrichtung
- 40: Mühle
- 50: Lagervorrichtung
- 60: Hilfsbrennvorrichtung

## Patentansprüche

1. Verfahren zum Betreiben einer Anlage, wobei die Anlage zur thermischen Behandlung eines mineralischen Stoffes dient, wobei die Anlage eine Vorrichtung zur thermischen Behandlung (12) aufweist, wobei die Anlage eine Brennkammer (20) aufweist, wobei die Brennkammer (20) zur Überführung der Brenngase mit der Vorrichtung zur thermischen Behandlung (12) verbunden ist, wobei die Brennkammer (20) einen Feststoffaustrag aufweist, wobei die Vorrichtung zur thermischen Behandlung (12) einen Brennbereich aufweist, wobei der Brennbereich mit einer Brennstoffzufuhrvorrichtung verbunden ist, wobei die Brennkammer (20) zur Erzeugung eines nicht vollständig ausgebrannten Feststoffrestes ausgebildet ist, wobei durch die lediglich unvollständige Verbrennung ein Feststoff erzeugt wird, der zum einen trocken ist und zum anderen einen hohen Brennwert aufweist, wobei der Feststoffaustrag der Brennkammer (20) mit einer Zerkleinerungsvorrichtung verbunden ist, wobei die Zerkleinerungsvorrichtung mit der Brennstoffzufuhrvorrichtung verbunden ist, **dadurch gekennzeichnet, dass** als Brennstoff für die Anlage nur Ersatzbrennstoffe eingesetzt werden und wobei der Ersatzbrennstoff der Brennkammer (20) zugeführt wird, wobei aus dem Ersatzbrennstoff ein nicht vollständig ausgebrannter Feststoffrest erzeugt wird, wobei durch die lediglich unvollständige Verbrennung ein Feststoff erzeugt wird, der zum einen trocken ist und zum anderen einen hohen Brennwert aufweist.

2. Verfahren nach Anspruch 1, **dadurch gekennzeichnet, dass** die Verbrennung des Ersatzbrennstoffes derart geführt wird, dass der nicht vollständig ausgebrannte Feststoffrest als brennbarer Feststoff einen Kohlenstoffanteil von wenigstens 30 Gew.-%, bevorzugt von wenigstens 50 Gew.-%, besonders bevorzugt von wenigstens 70 Gew.-%, Kohlenstoff aufweist.

3. Verfahren nach einem der Ansprüche 1 bis 2, **dadurch gekennzeichnet, dass** dem Brennbereich ausschließlich nicht vollständig ausgebrannter Feststoffrest als Brennstoff zugeführt wird.

4. Verfahren nach einem der vorstehenden Ansprüche, **dadurch gekennzeichnet, dass** die Verbrennung in der Brennkammer (20) unter oxidierenden Bedingungen durchgeführt wird.

5. Verfahren nach einem der vorstehenden Ansprüche, **dadurch gekennzeichnet, dass** der ausgetragene brennbare Feststoff auf eine flugfähige Partikelgröße zerkleinert wird.

6. Verfahren nach einem der vorstehenden Ansprüche, **dadurch gekennzeichnet, dass** die Gaszufuhr zur Brennkammer (20) derart geregelt wird, dass der Sauerstoffgehalt in den Brenngasen zwischen 1 % und 5 % liegt.

7. Verfahren nach einem der vorstehenden Ansprüche, **dadurch gekennzeichnet, dass** der Anteil des ausgetragenen brennbare Feststoffes über die Zufuhrmenge und Verweilzeit des Brennstoffs in der Brennkammer (20) eingestellt wird.

8. Verfahren nach einem der vorstehenden Ansprüche, **dadurch gekennzeichnet, dass** der zerkleinerte brennbare Feststoff mit einem Gasstrom zur Verbrennung der Vorrichtung zur thermischen Behandlung (12) zugeführt wird.

9. Verfahren nach einem der vorstehenden Ansprüche, **dadurch gekennzeichnet, dass** der zerkleinerte brennbare Feststoff der Brennkammer (20) zugeführt wird.

10. Verfahren nach einem der Ansprüche 1 bis 8, **dadurch gekennzeichnet, dass** der zerkleinerte brennbare Feststoff der Reduktionsvorrichtung (13) zugeführt wird.

11. Verfahren nach einem der vorstehenden Ansprüche, **dadurch gekennzeichnet, dass** der Feststoffaustrag der Brennkammer (20) mit einer Kühlvorrichtung (30) verbunden ist, wobei die Kühlvorrichtung (30) zur Kühlung des aus der Brennkammer (20) ausgetragenen brennbare Feststoffs ausgebildet ist, wobei die Kühlvorrichtung (30) mit einer Zerkleinerungsvorrichtung verbunden ist.

12. Verfahren nach einem der vorstehenden Ansprüche, **dadurch gekennzeichnet, dass** die Kühlvorrichtung (30) eine Gaskühlung aufweist.

13. Verfahren nach Anspruch 12, **dadurch gekennzeichnet, dass** die Kühlvorrichtung (30) eine Verbindung zur Brennkammer (20) zur Überführung der vorgewärmten Luft aufweist.

14. Verfahren nach Anspruch 12, **dadurch gekennzeichnet, dass** die Anlage eine der Vorrichtung zur thermischen Behandlung (12) nachgeschalteten Reduktionsvorrichtung (13) aufweist, wobei die Kühlvorrichtung (30) eine Verbindung zur Reduktionsvorrichtung (13) zur Überführung des vorgewärmten Gases aufweist.

15. Verfahren nach einem der vorstehenden Ansprüche, **dadurch gekennzeichnet, dass** die Kühlvorrichtung (30) eine Wassereinspritzung aufweist.

16. Verfahren nach einem der vorstehenden Ansprüche, **dadurch gekennzeichnet, dass** die Kühlvorrichtung (30) ein Wärmetauschmedium aufweist, wobei die Kühlvorrichtung (30) ein Trennelement zur Trennung von Wärmetauschmedium und ausgetragenem brennbare Feststoff aufweist.

17. Verfahren nach einem der vorstehenden Ansprüche, **dadurch gekennzeichnet, dass** die Anlage einen Flugstromcalcinator aufweist, wobei der Brennbereich im oder am Flugstromcalcinator angeordnet ist.

## Claims

1. Method for operating a plant, wherein the plant is used for the thermal treatment of a mineral substance, wherein the plant comprises a thermal treatment device (12), wherein the plant comprises a combustion chamber (20), wherein the combustion chamber (20) is connected to the thermal treatment device (12) for the transfer of combustion gases, wherein the combustion chamber (20) has a solid discharge, wherein the thermal treatment device (12) has a combustion area, wherein the combustion area is connected to a fuel supply device, wherein the combustion chamber (20) is designed to produce a not completely burnt solid residue, wherein the incomplete combustion produces a solid that is dry on the one hand and has a high calorific value on the other, wherein the solid discharge of the combustion chamber (20) is connected to a comminution device, wherein the comminution device is connected to the fuel supply device, **characterised in that** only substitute fuels are used as fuel for the plant and the substitute fuel is fed to the combustion chamber (20), whereby a not completely burned solid residue is produced from the substitute fuel, whereby the incomplete combustion produces a solid material which is dry on the one hand and has a high calorific value on the other.

2. Method according to claim 1, **characterised in that** the combustion of the substitute fuel is controlled in such a way that the incompletely burned solid residue, as a combustible solid, has a carbon content of at least 30% by weight, preferably at least 50% by weight, and particularly preferably at least 70% by weight.

3. Method according to one of claims 1 to 2, **characterised in that** only incompletely burned solid residue is fed to the combustion area as fuel.

4. Method according to one of the preceding claims, **characterised in that** combustion in the combustion chamber (20) is carried out under oxidising conditions.

5. Method according to one of the preceding claims, **characterised in that** the discharged combustible solid is comminuted to an airborne particle size.

6. Method according to one of the preceding claims, **characterised in that** the gas supply to the combustion chamber (20) is regulated in such a way that the oxygen content in the combustion gases is between 1% and 5%.

7. Method according to one of the preceding claims, **characterised in that** the proportion of the discharged combustible solid is adjusted via the feed quantity and dwell time of the fuel in the combustion chamber (20).

8. Method according to one of the preceding claims, **characterised in that** the comminuted combustible solid material is fed to the thermal treatment device (12) with a gas stream for combustion.

9. Method according to one of the preceding claims, **characterised in that** the comminuted combustible solid is fed to the combustion chamber (20).

10. Method according to one of claims 1 to 8, **characterised in that** the comminuted combustible solid is fed to the reduction device (13).

11. Method according to one of the preceding claims, **characterised in that** the solid discharge of the combustion chamber (20) is connected to a cooling device (30), wherein the cooling device (30) is designed to cool the combustible solid discharged from the combustion chamber (20), wherein the cooling device (30) is connected to a comminution device.

12. Method according to one of the preceding claims, **characterised in that** the cooling device (30) comprises gas cooling.

13. Method according to claim 12, **characterised in that** the cooling device (30) has a connection to the combustion chamber (20) for transferring the preheated air.

14. Method according to claim 12, **characterised in that** the plant has a reduction device (13) connected downstream of the thermal treatment device (12), wherein the cooling device (30) has a connection to the reduction device (13) for transferring the preheated gas.

15. Method according to one of the preceding claims, **characterised in that** the cooling device (30) has a water injection.

16. Method according to one of the preceding claims, **characterised in that** the cooling device (30) comprises a heat exchange medium, wherein the cooling device (30) comprises a separating element for separating the heat exchange medium and the discharged combustible solid.

17. Method according to one of the preceding claims, **characterised in that** the plant comprises a fluidised bed calciner, wherein the combustion zone is arranged in or on the fluidised bed calciner.

## Revendications

1. Procédé pour faire fonctionner une installation, l'installation servant au traitement thermique d'une matière minérale, l'installation comportant un dispositif de traitement thermique (12), l'installation comportant une chambre de combustion (20), la chambre de combustion (20) étant reliée au dispositif de traitement thermique (12) pour le transfert des gaz de combustion, la chambre de combustion (20) comportant une évacuation de matières solides, le dispositif de traitement thermique (12) comportant une zone de combustion, la zone de combustion étant reliée à un dispositif d'alimentation en combustible, la chambre de combustion (20) étant conçue pour produire un résidu solide non complètement brûlé, la combustion uniquement incomplète produisant une matière solide qui est d'une part sèche et d'autre part présente un pouvoir calorifique élevé, le dispositif d'évacuation des matières solides de la chambre de combustion (20) étant relié à un dispositif de broyage, le dispositif de broyage étant relié au dispositif d'alimentation en combustible, **caractérisé en ce que** seuls des combustibles de substitution sont utilisés comme combustible pour l'installation et **en ce que** le combustible de substitution est acheminé vers la chambre de combustion (20), un résidu solide non complètement brûlé étant produit à partir du combustible de substitution, la combustion incomplète générant un solide qui est d'une part sec et d'autre part présente un pouvoir calorifique élevé.

2. Procédé selon la revendication 1, **caractérisé en ce que** la combustion du combustible de substitution est réalisée de telle sorte que le résidu solide non complètement brûlé présente, en tant que solide combustible, une teneur en carbone d'au moins 30 % en poids, de préférence d'au moins 50 % en poids, de préférence encore d'au moins 70 % en poids.

3. Procédé selon l'une des revendications 1 à 2, **caractérisé en ce que** seuls les résidus solides non complètement brûlés sont acheminés vers la zone de combustion en tant que combustible.

4. Procédé selon l'une des revendications précédentes, **caractérisé en ce que** la combustion dans la chambre de combustion (20) est effectuée dans des conditions oxydantes.

5. Procédé selon l'une des revendications précédentes, **caractérisé en ce que** la matière solide combustible évacuée est broyée à une taille de particules pouvant être transportées par le courant d'air.

6. Procédé selon l'une des revendications précédentes, **caractérisé en ce que** l'alimentation en gaz de la chambre de combustion (20) est régulée de telle sorte que la teneur en oxygène des gaz de combustion se situe entre 1 % et 5 %.

7. Procédé selon l'une des revendications précédentes, **caractérisé en ce que** la proportion de matière combustible solide évacuée est réglée par le débit d'alimentation et le temps de séjour du combustible dans la chambre de combustion (20).

8. Procédé selon l'une des revendications précédentes, **caractérisé en ce que** la matière solide combustible broyée est acheminée avec un flux de gaz vers le dispositif de traitement thermique (12) pour y être brûlée.

9. Procédé selon l'une des revendications précédentes, **caractérisé en ce que** la matière combustible broyée est acheminée vers la chambre de combustion (20).

10. Procédé selon l'une des revendications 1 à 8, **caractérisé en ce que** la matière combustible broyée est acheminée vers le dispositif de réduction (13).

11. Procédé selon l'une des revendications précédentes, **caractérisé en ce que** la sortie de matière solide de la chambre de combustion (20) est reliée à un dispositif de refroidissement (30), le dispositif de refroidissement (30) étant conçu pour refroidir la matière combustible sortie de la chambre de combustion (20), le dispositif de refroidissement (30) étant relié à un dispositif de broyage.

12. Procédé selon l'une des revendications précédentes, **caractérisé en ce que** le dispositif de refroidissement (30) comprend un refroidissement par gaz.

13. Procédé selon la revendication 12, **caractérisé en ce que** le dispositif de refroidissement (30) comprend une connexion à la chambre de combustion (20) pour transférer l'air préchauffé.

14. Procédé selon la revendication 12, **caractérisé en ce que** l'installation comprend un dispositif de réduction (13) monté en aval du dispositif de traitement thermique (12), le dispositif de refroidissement (30) comportant une connexion vers le dispositif de réduction (13) pour transférer le gaz préchauffé.

15. Procédé selon l'une des revendications précédentes, **caractérisé en ce que** le dispositif de refroidissement (30) comprend une injection d'eau.

16. Procédé selon l'une des revendications précédentes, **caractérisé en ce que** le dispositif de refroidissement (30) comprend un milieu d'échange thermique, le dispositif de refroidissement (30) comprenant un élément de séparation pour séparer le milieu d'échange thermique et les matières solides combustibles évacuées.

17. Procédé selon l'une des revendications précédentes, **caractérisé en ce que** l'installation comprend un calcinateur à flux ascendant, la zone de combustion étant disposée dans ou sur le calcinateur à flux ascendant.
